# EUROPEAN PATENT APPLICATION

(11) **EP 1 522 939 A1**
(43) Date of publication of application: **13.04.2005**
(21) Application number: 04019186.8
(22) Date of filing: 12.08.2004
(51) Int. Cl.: G06F 17/60

(54) **Method for providing process-dependent data**

(30) Priority: 12.08.2003 DE 10337032
(71) Applicant: GBS Global Business Software and Services Limited, Cardiff, CF5 2QL (GB)
(72) Inventor: Meissner, Hans-Joachim, 80933 München (DE)
(74) Representative: VOSSIUS & PARTNER

(57) **Abstract**

The present invention provides a method of providing data to a user of a data processing system on a process being executed, comprising providing a first computer program being executed on said data processing system, providing identification data relating to a process and/or a process step currently executed by said first computer program, providing a data source with detailed data corresponding to each of a plurality of identification data, evaluating the identification data for selecting a corresponding detailed data, and outputting data indicating that detailed data has been selected. The invention further provides an apparatus for providing data to a user on a process being executed which is adapted to carry out the method according to the present invention and a computer readable medium comprising a computer program that when loaded in a computer causes said computer to be suitably programmed to carry out the method according to the present invention.

## Description

The present invention relates to a method for providing data to a user of a data processing system on a process being executed. In particular, the present invention relates to executing a help function during the execution of a computer program.

During execution of a process on a data processing system, there is the risk of erroneous actions being carried out by the user who executes the process, said erroneous actions may be carried out, for example, accidentally or due to the user's ignorance. If the process is, e.g., carried out by a program on a computer, there may be erroneous inputs made by the user which can hardly be discovered and avoided using error handling functions incorporated in the computer program. These errors may cause substantial delays in the process flow. In particular, in integrated computer applications which immediately and automatically process the input data, wrong data inputs are difficult to discover and correcting these errors is time-consuming. For example, when conducting transactions inputs can only be tested formally, for example, by only accepting digits as inputs when a bank account number has to be input but it is not possible to test whether the input data, i.e. the bank account number, is correct. Such errors are not or only late discovered, for example, during an internal audit. Correcting these errors is very time-consuming.

Help functions which are typically included in computer programs cannot prevent users from carrying out erroneous actions like making wrong inputs. It is because known help-functions only provide information on the user's request. In case a user believes that the action he intends to carry out is correct, he will not request any help information. Therefore, errors which are caused by the user's ignorance cannot be avoided.

Moreover, typical help functions rely on keywords input by the user to display the respective information. It is thus often difficult and time-consuming for the user to find the information he is interested and users thus often avoid using these help-functions.

The knowledge of the individual user is thus important to avoid errors in processes. Training of the users can, e.g., be carried out using manuals which describe the respective processes in great detail or in a regular training of the users which involves substantial costs.

Known methods to reduce erroneous actions in processes thus rely on a user who has to actively request the respective information or involve extensive training of the users which is time-consuming.

It is thus an object of the present invention to provide an improved method for providing data to a user which overcomes the above problems. In particular, it is an object of the invention to assist a user in carrying out a process and to provide him with the relevant data which is needed to avoid potential errors.

These objects are achieved with the features of the claims.

The present invention provides a method for providing data to a user relating to the process and/or process step which is currently carried out. A process according to the present invention typically is executed by a computer program running on a data processing system, like a personal computer or a computer linked to a network like the internet. The computer program may be any kind of application software. A process may also comprise several computer programs which are executed in series or parallel. With the invention, detailed data corresponding to the process and/or a process step currently executed is selected based on identification data each individually identifying one of the following objects, the system environment, the computer program, the process and/or process step currently executed or a data input made by the user or similar data in a predefined data field.

According to the invention, the respective selected detailed data may be provided on request of the user. In this case, however, it is preferable to only provide those data which are related to the process or the process step currently executed so that the user is able to immediately find the information he is interested in. On the other hand, the selected detailed data may also be provided automatically. For example, when a process step is executed which involves a high risk that an erroneous action is carried out, the user may be reminded, for example, to carefully check his inputs.

The method of the present invention may automatically evaluate the identification data when the process and/or process step is carried out. Further, the level of detailed data available relating to the currently executed process and/or process step may be displayed. This allows the user to judge during the execution of a certain process whether only global data on the process used or specific data on the process step currently carried out is available.

The detailed data selected and potentially outputted to the user may be any kind of data which may be relevant for the user to correctly carry out the process. This data may, for example, be provided in the form of a pop-up window showing some background information in text form or a step-by-step instruction which either may be presented to the user or may also be followed by the user in parallel to the presentation. The data may also be presented in form of a video, a presentation, a web-link or any other suitable document. Further to the detailed data selected, is also possible to inhibit certain erroneous actions.

It may further be specified in the method of the present invention that only certain users or a group of users are provided with the data. For example, it is possible to provide only those users with the selected detailed data who are less experienced in carrying out a certain process. This may be done by inputting or otherwise providing user information identifying the user and selecting the detailed data on the basis of said user information. It may further be specified that detailed data is only displayed a limited time, for example, only when a method step is carried out by a user for a first time or only a certain time after a new feature has been introduced in the process.

It is further possible for the user to include individual data which he considers important to be displayed when he executes certain process steps. Also, existing information, for example help information provided in a computer program, may be included. Feedback from the user, either comprising further information which the user considers to be important to be provided also to other users or information on the usefulness of the data selected may be used to improve the detailed data being provided by the method of the present invention.

The present invention further provides an apparatus for providing data to a user on a process being executed which is adapted to carry out the method according to the present invention and a computer readable medium comprising a computer program that when loaded in a computer causes said computer to be suitably programmed to carry out the method according to the present invention.

Since according to the present invention detailed data is provided to the user during execution of a process which specifically relates to the process and/or a process step which is currently executed, the user is provided with data which is helpful and necessary in order to successfully execute the process. Therefore, the method of the present invention allows to significantly reduce the risk of user errors during the execution of a process which results in a significant reduction of delays associated with those user errors. Furthermore, the method of the present invention reduces the need to regularly train the users. Since the method of the present invention is carried out independently from the first computer program or application program which is executed, no specific interfaces to the executed computer programs are needed. The method of the present invention further allows to accompany the user through the execution of several consecutive processes which have to be carried out in order to achieve a certain result.

In the following the present invention will be described in more detail and with reference to the Figures.
- Fig. 1: shows a screen shot of a computer display wherein a program which carries out the method of the present invention is currently running.
- Fig. 2: schematically illustrates the functions of a computer program which carries out the present invention.
- Fig. 3: shows a flow diagram illustrating program steps carried out by a program which carries out the method of the present invention.
- Fig. 4: shows an example of a solution based on the method of the present invention in an IT environment.
- Fig. 5: shows various ways to access the detailed data.

In a preferred embodiment, the method according to the present invention is carried out by a computer program which is executed on a computer. Preferably, the computer program permanently checks whether detailed data relating to the process or the process step currently executed on the computer is available and, if this is the case, which is the level of the detailed data available. The level of detailed data available may be displayed permanently, e.g. using an icon with a special appearance for example a special shape, symbol or color code. Different icons, preferably different colors of the icon, may indicate whether no detailed data, only general information or specific data on the object currently used, preferably on the computer program currently used or on the program step currently executed is available and thus selected.

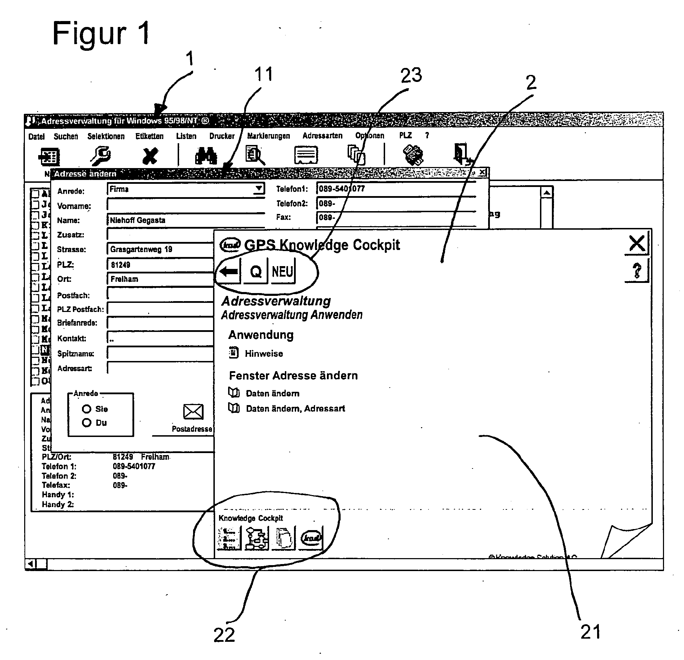

In Figure 1, a screen shot of a computer display is shown wherein a program which carries out the method of the present invention is currently running. In a window 1, a program for address registration is currently executed. During execution of this program, another window 11 was opened which allows to change the information included in an address information. That is, the program step which is currently executed is inputting information relating to a certain address. The information that this specific method step is currently executed is made available to the program which includes the method of the present invention, for example, in that a specific identification code which is assigned to the window 11 being opened when the program step of inputting and/or changing an address is executed is known to the program and correlated with certain detailed data. On demand of the user, a window 2 is opened wherein specific information 21 which relates to the process step currently executed is presented. In window 2, icons 22 for acquiring specific documents (such as step-by-step instructions, videos, information documents such as, for example, presentations or any other suitable document) and icons 23 which allow for navigation (such as last information accessed, feedback, input a new question) are provided.

Upon opening of a specific window which is related to a certain program step, like window 11 in the Figure, it is also possible to automatically open an information window like window 2, wherein specific information which may be interesting to the user when executing the program step is provided. This may be an important information which is related to the program step currently executed, like a warning or a message to draw the user's attention to a certain problem which is associated with the program step currently executed. This can be done, e.g., by identifying detailed data with a certain program step and to automatically display the data when said program step is executed.

The detailed data displayed in window 2 opened by the program which incorporates the method of the present invention, regardless of whether it is opened on the demand of the user or automatically, may include any kind of data which may help the user to successfully complete the process the user is currently working on. Since the method of the present invention is not executed with regard to a specific process or program only, but permanently runs on the computer, also processes which include a series of several computer programs may be followed. If, for example, a document should be scanned and be converted to a text, the process includes several programs such as a scanning program, a program to perform optical character recognition (OCR) and a word processing program. This entire process may be followed and detailed data for every program step occurring during this process and, in particular, the transition steps between the programs may be made available.

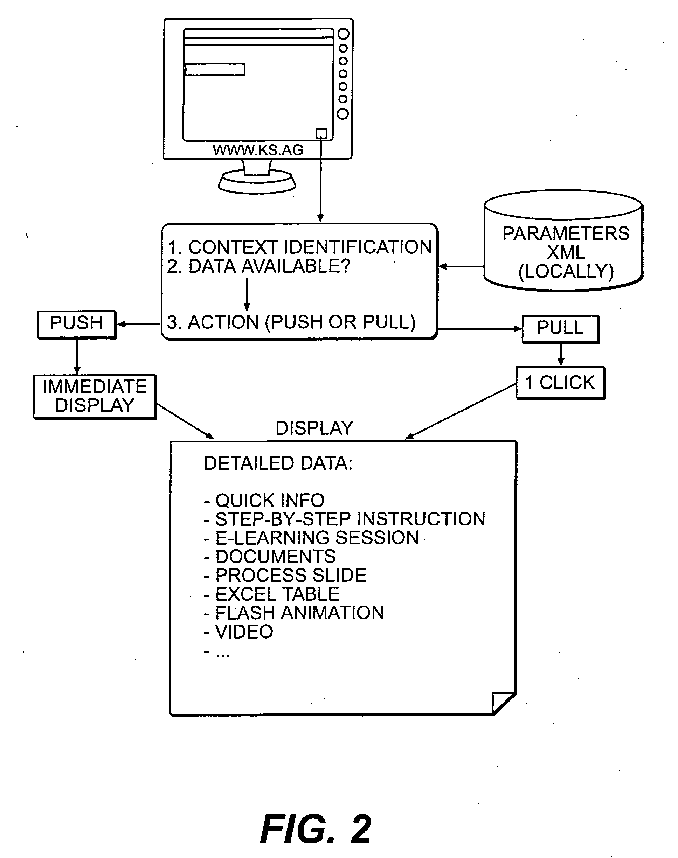

Fig. 2 shows the basic program steps executed by a program which carries out the method of the present invention. The program identifies the context corresponding to the program, process and/or process step currently executed on the computer. This context information (identification data) is then evaluated so that the program is able to decide whether detailed data is available or not. This detailed data may then be either automatically displayed ("push") or displayed on request of the user ("pull"). The request of the user may be executed by one click on a respective icon which is displayed on the computer display. The detailed data displayed may be, as discussed above, text information (quick info), a step-by-step instruction, an e-learning session, any kind of document which is useful for the user in association with the context, a presentation, a video etc.

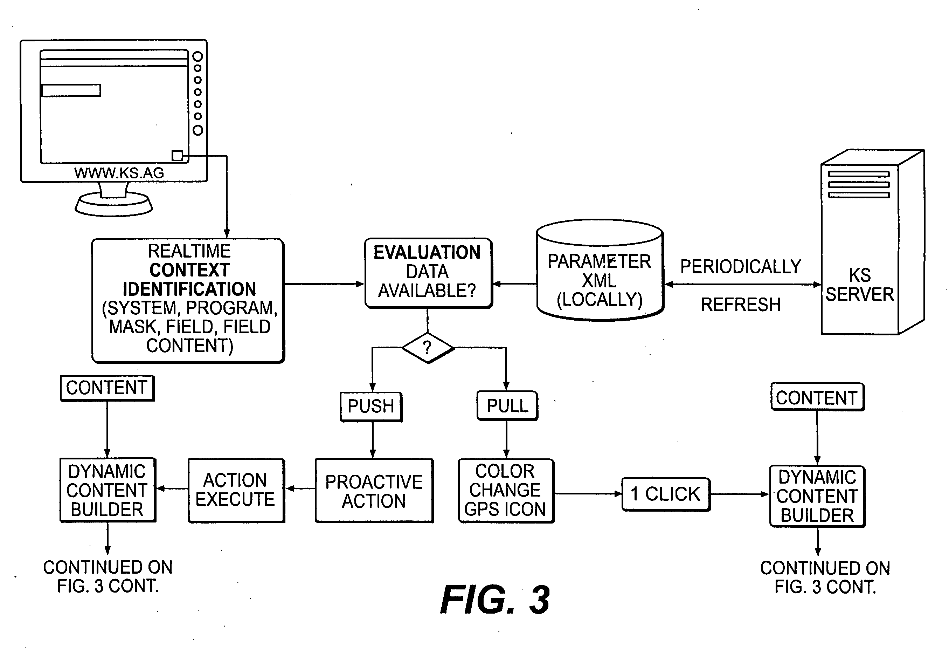

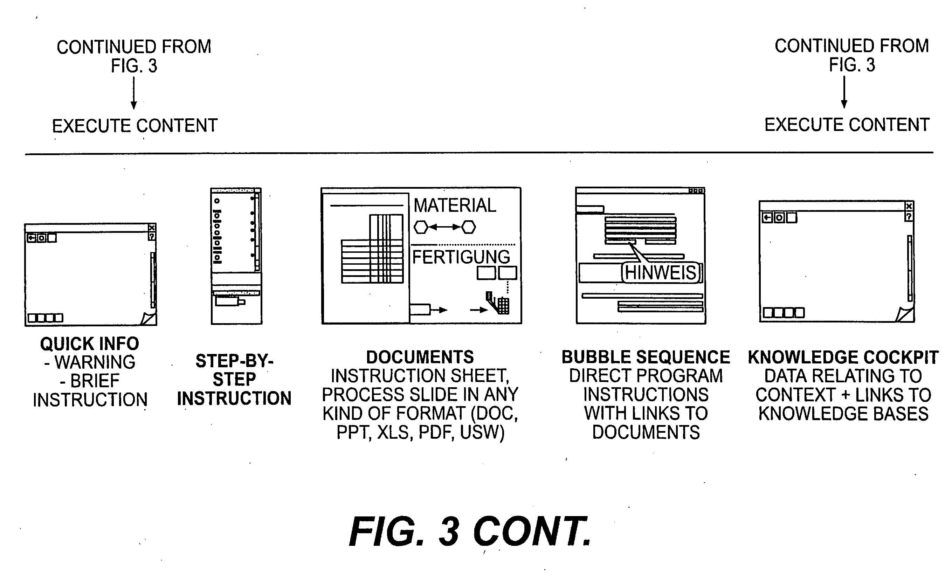

In Fig. 3, a flow diagram of a concrete example of implementing the method of the present invention on a computer is illustrated. In this example, a GPS (Global Process navigation System) icon is permanently displayed on the computer. The color of the icon indicates the level of detailed data available. For example, a red icon may signify that no information is available for the program or process currently executed, a yellow icon may signify that only global information on the program executed is available and a green icon may signify that detailed data on the process currently executed is available. The context identification (providing an identification data) is done in real time and the evaluation of this identification data is made automatically. The evaluation of the identification data is then done by selecting corresponding detailed data from a data base which is stored locally and periodically refreshed via a server. As shown in Fig. 2, the information may either be automatically displayed or displayed on request of the user, i.e., "pushed" or "pulled". The detailed data may then either be displayed automatically by automatically executing an action (displaying quick info, executing a step-by-step instruction or a bubble sequence). Alternatively, the information may be retrieved on request of the user by one click only and then, in response to said click, a respective action is executed.

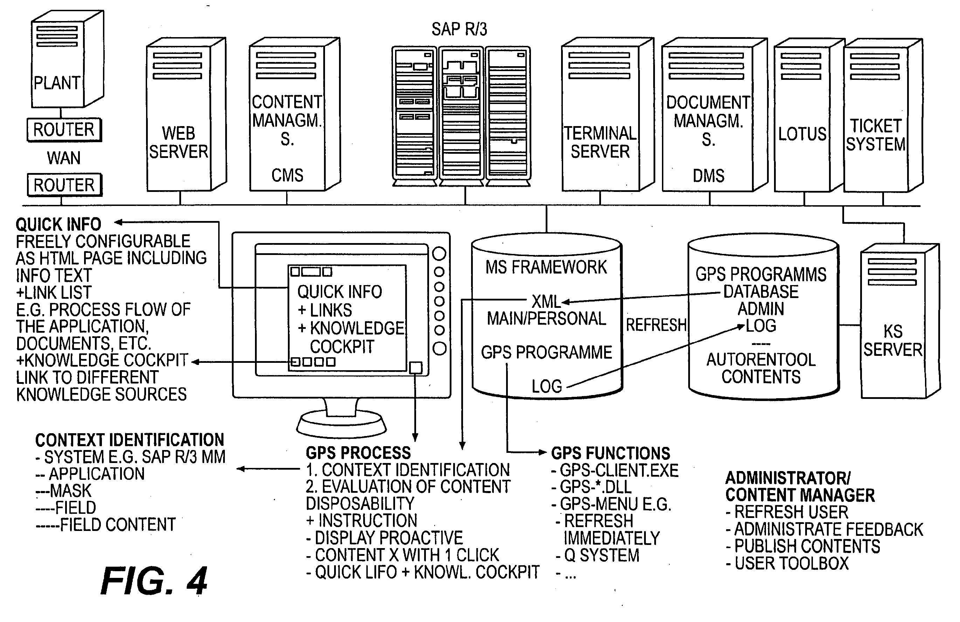

Fig. 4 illustrates an example of an application of the method of the present invention. As shown in Fig. 4, the method of the present invention may be incorporated in an SAP R/3 system. The detailed data which is provided with the method of the present invention, e.g., the quick info, may be freely configurable as an HTML page including info text. In addition, a link list to further data or a knowledge cockpit as shown in Fig. 1 may be provided. The method of the present invention is incorporated in the system shown in Fig. 4 as the GPS process corresponding to the basic process shown in Figs. 2 and 3. In the examples shown in Fig. 4, the context identification is done specifically for the SAP R/3 system.

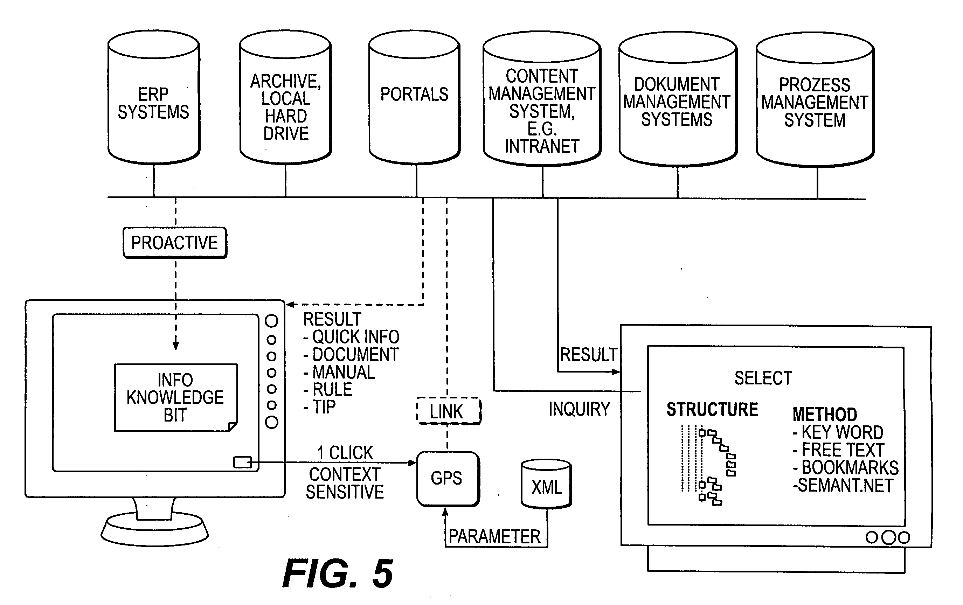

Fig. 5 shows various possibilities to store and access the detailed data. The data may be stored on ERP systems, in an archive, e.g., on a local hard drive, using web portals, in a content management system, e.g., the internet, a document management system, or a process management system. The result to be displayed is evaluated using a program as previously described with reference to Figs. 2 and 3 (GPS). The data may be automatically displayed (proActive) or may be requested on demand (inquiry) and selected via a data structure or a known method like a key word search, a free text search, via bookmarks or a semantic net.

The information provided may be stored as XML-files or in any other format which is suitable to be displayed on a computer. The program only uses a small amount of resources available on a computer system since only minor information, i.e. identification data comprising data identifying the computer program, the process and/or process step currently executed and/or a data input currently executed by the user, e.g. an identification code of a window opened by the computer program, are monitored.

The user can preferably input detailed data with respect to any object which is later selectable from the data source.

## Claims

1. A method of providing data to a user of a data processing system on a process being executed, comprising the steps of:
a) providing a first computer program being executed on said data processing system,
b) providing identification data relating to a process and/or a process step currently executed by said first computer program,
c) providing a data source with detailed data corresponding to each of a plurality of identification data,
d) evaluating the identification data for selecting a corresponding detailed data, and
e) outputting data indicating that detailed data has been selected.

2. The method according to claim 1, wherein said selected detailed data is provided to a display on request of a user.

3. The method according to claim 1, wherein said selected detailed data is automatically provided based on predetermined identification data.

4. The method according to any one of the preceding claims, wherein step d) is performed automatically when said process and/or process step is executed.

5. The method according to any one of the preceding claims, further comprising outputting the level of detailed data available relating to the currently executed process and/or process step.

6. The method according to any one of the preceding claims, wherein said detailed data comprises a help function on further actions to be executed in the current process and/or process step.

7. The method according to claims 6, wherein said help function comprises a written explanation, a step-by-step instruction, an e-leaming session, a video and/or a similar document.

8. The method according to any one of the preceding claims, wherein said identification data comprises first identification data identifying said first computer program, second identification data identifying said process currently executed, third identification data identifying said process step currently executed and/or data input currently executed by the user.

9. The method according to any one of the preceding claims, further comprising the step of inputting user data corresponding to the user, wherein said detailed data is selected based on said user data.

10. The method according to any one of the preceding claims, wherein said detailed data is selected based on previous selections during a predetermined time interval.

11. The method according to any one of the preceding claims, further comprising the step of inhibiting an erroneous action by the user.

12. An apparatus for providing data to a user on a process being executed on said apparatus, comprising:
a) means for providing a first computer program being executed on said apparatus,
b) means for providing identification data relating to a process and/or a process step currently executed by said first computer program,
c) means for providing a data source with detailed data corresponding to each of a plurality of identification data,
d) means for evaluating the identification data for selecting a corresponding detailed data, and
e) means for outputting data indicating that detailed data has been selected.

13. A computer readable medium comprising a computer program that when loaded into a computer causes said computer to be suitably programmed to carry out the method according to any one of claims 1 to 11.
